# EUROPEAN PATENT APPLICATION

(11) **EP 2 515 148 A1**
(43) Date of publication of application: **24.10.2012**
(21) Application number: 10837428.1
(22) Date of filing: 29.11.2010
(51) Int. Cl.: G02B 5/02, B32B 7/02, F21S 2/00, G02F 1/13357, F21Y 101/02

(54) **OPTICAL LAMINATE, ILLUMINATING DEVICE, LIQUID CRYSTAL DISPLAY DEVICE, AND METHOD FOR MANUFACTURING OPTICAL LAMINATE**

(30) Priority: 15.12.2009 JP 2009284285
(71) Applicant: Sharp Kabushiki Kaisha, Osaka-shi, Osaka 545-8522 (JP)
(72) Inventor: KAIDA, Kazuya, Osaka-shi, Osaka 545-8522 (JP)
(74) Representative: Müller-Boré & Partner Patentanwälte
(86) International application number: PCT/JP2010/071275
(87) International publication number: WO 2011/074399

(57) **Abstract**

An light guide (12) has an indented pattern (105) on its front surface (10a) and an indented pattern (103) on its back surface (10b), and includes: a light guide plate (15) including the indented pattern (105) provided on the front surface (10a); a light distribution control part (13) including the indented pattern (103) provided on the back surface (10b); and a middle layer (14) provided between the light guide plate (15) and the light distribution control part (13), the light distribution control part (13) being less in film thickness than the light guide plate (15), and the light distribution control part (13) having a glass transition point lower than that of the light guide plate (15). This makes it possible to form indented patterns on the front surface and the back surface of an optical laminate constituted by a stack of a plurality of layers, while preventing occurrence of defects.

## Description

### Technical Field

The present invention relates to an optical laminate which emits light in the form of a plane, an illuminating device, and a method for manufacturing an optical laminate.

### Background Art

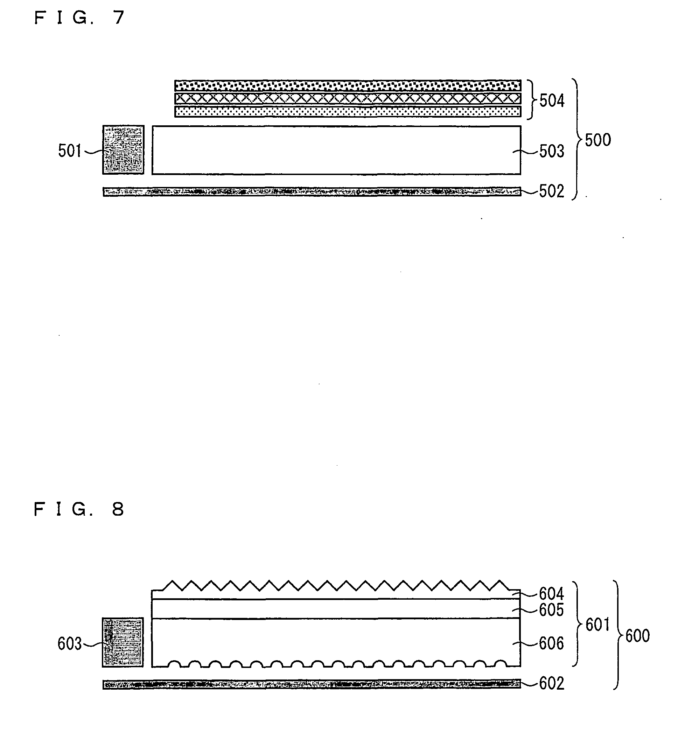

Conventionally, a side edge type backlight has been used as a backlight for use in a liquid crystal display device. Such a side edge type backlight is described with reference to Fig. 7.

Fig. 7 is a view illustrating a configuration of a conventional side edge type backlight.

As illustrated in Fig. 7, a backlight 500 is constituted by a stack of a reflecting plate 502, a light guide plate 503 and an optical film 504, which are arranged in this order from a back surface to a front surface. A light source 501 is provided on a side surface side of the light guide plate 503.

The backlight 500 is configured such that, in order to allow light emitted from the light source 501 to enter the light guide plate 503 through the side surface and then travel inside the light guide plate 503 so that the backlight 500 serves as a surface light source, the reflecting plate 502 is provided on the back surface side of the light guide plate 503 and the optical film 504 is provided on the front surface side of the light guide plate 503.

The optical film 504 is generally constituted by a stack of about three to four films including a diffusing film and a light concentrating film such as BEF (Brightness enhancement film (registered trademark)).

As described above, the backlight 500, which is of a general side edge type, is constituted by a number of sheets such as the reflecting plate 502, the light guide plate 503, and the optical film 504 which is constituted by a stack of a plurality of films. Therefore, it is difficult to reduce the thickness of the backlight 500. This has been a cause of an increase in cost.

Further, there has been a problem in which, since the optical film 504 is constituted by a plurality of films, each of the plurality of films causes a high optical loss and thus light emitted from the light source 501 is not used efficiently.

In view of such circumstances, there have been developed backlights each having a smaller number of sheets. Most of such backlights each utilize a difference between refractive indices of optical materials. Specifically, this is achieved by forming prism patterns on both the front and back surfaces of a light guide plate.

For example, Patent Literature 1 discloses a light guide that controls diffusion and concentration of light by (i) forming prism patterns on both the front and back surfaces of a light guide plate and (ii) utilizing a difference between refractive indices of optical materials. The light guide disclosed in Patent Literature 1 is described with reference to Fig. 8.

Fig. 8 is a view illustrating a configuration of a liquid crystal display device including the light guide of Patent Literature 1.

As illustrated in Fig. 8, a liquid crystal display device 600 includes a light guide 601, a reflection sheet 602 provided on a back surface side of the light guide 601, and an LED 603 which serves as a light source and is provided on a side surface side of the light guide 601. The liquid crystal display device 600 further includes a liquid crystal display panel (not illustrated) on a front surface side of the light guide 601.

The light guide 601 is constituted by a stack of a light distribution control part 604, a low refractive layer 605 and a light guide plate 606, which are arranged in this order from the front surface and are joined together. A front surface of the light distribution control part 604 (which surface is opposite to a surface in contact with the low refractive layer 103, i.e., the front surface of the light guide 601) and a back surface of the light guide plate 606 (which surface is opposite to a surface in contact with the low refractive layer 605, i.e., the back surface of the light guide 601) serve as prism planes on which protrusions and indentations are formed.

Since the light guide 601 has the prism planes on the front and back surfaces like above, the light guide 601 is capable, without having to include a plurality of optical films such as BEF, of guiding light emitted from the LED 603 into the light guide 601 and causing the light guide 601 to serve as a surface light source.

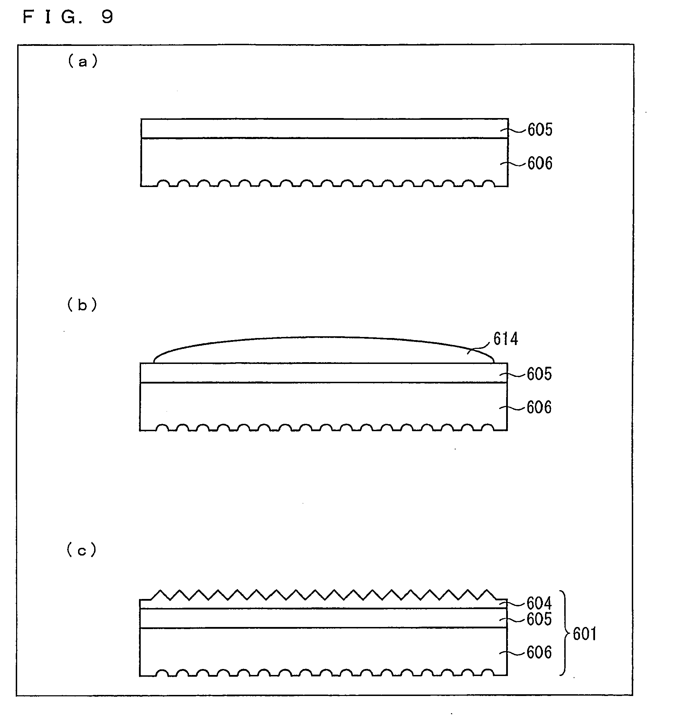

The light guide 601 is produced in the following manner.
(a) of Fig. 9 is a view illustrating how the low refractive layer is placed on the light guide plate. (b) of Fig. 9 is a view illustrating how a resin is applied to the low refractive layer, which resin is to be formed into the light distribution control part. (c) of Fig. 9 is a view illustrating how a completed light guide looks.

Refer to (a) of Fig. 9. The light guide plate 606 is formed with use of a resin material having a high refractive index, which resin material is for use in an eyeglass. Meanwhile, protrusions and indentations are formed on the back surface of the light guide plate 606 so that a prism plane is formed. Then, the low refractive layer 605 is formed with use of a UV curable resin on a surface (which is opposite to the prism plane) of the light guide plate 606 by 2P (Photo-polymer) process. Note here that the light guide plate 606 and the low refractive layer 605 may be joined together with an adhesive.

Next, refer to (b) of Fig. 9. A resin 614, which is to be formed into the light distribution control part 604, is applied to a surface (which is opposite to a surface in contact with the light guide plate 606) of the low refractive layer 605. Then, as illustrated in (c) of Fig. 9, the light distribution control part 604 is formed on the low refractive layer 605 by the 2P process. Meanwhile, protrusions and indentations are formed also on a surface of the light distribution control part 604, which surface is opposite to a surface in contact with the low refractive layer 605, so that a prism plane on the front surface of the light guide 601 is formed. In this way, the light guide 601 is produced.

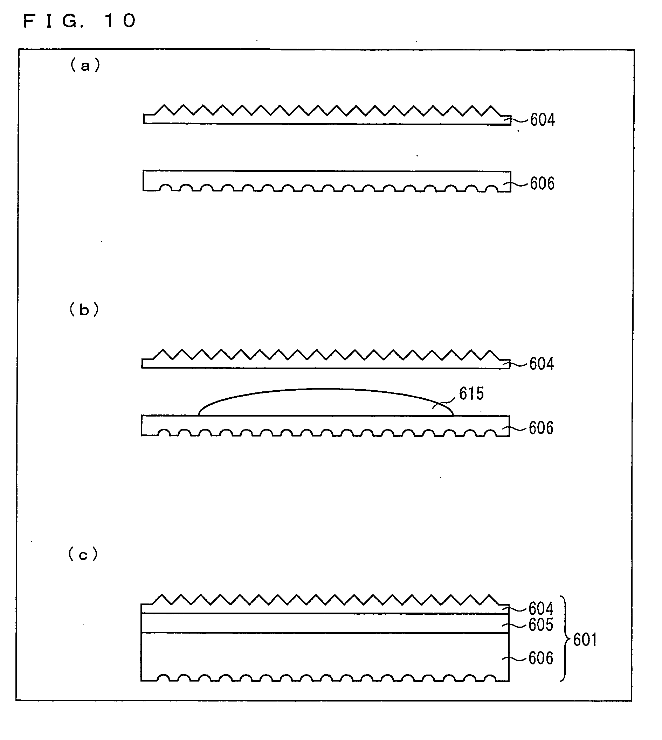

Alternatively, as illustrated in (a) to (c) of Fig. 10, the light guide plate 606 and the light distribution control part 604 can be each individually prepared and constitute a single light guide 601. (a) of Fig. 10 is a view illustrating how the light guide plate and the light distribution control part are arranged. (b) of Fig. 10 is a view illustrating how a resin which is to constitute the low refractive layer is applied. (c) of Fig. 10 is a view illustrating how a complete light guide looks.

The light guide plate 606 and the light distribution control part 604, on each of which a prism plane has already been formed, are prepared, and are arranged so that their prism planes face in opposite directions (see (a) of Fig. 10). Next, a resin 615, which is to constitute the low refractive layer 605, is applied to a surface of the light guide plate 606 which surface is opposite to the prism plane of the light guide plate 606 (see (b) of Fig. 10). Then, the light distribution control part 604 is placed in a predetermined position and is pressed to be joined, thereby the light guide 601 is completed (see (c) of Fig. 10).

### Citation List

### Patent Literature

Patent Literature 1
   Japanese Patent Application Publication, Tokukai, No. 2005-134441 A (Publication Date: May 26, 2005)

### Summary of Invention

### Technical Problem

As described earlier, according to the light guide 601 of Patent Literature 1, the layers that constitute the light guide 601 are stacked by (i) forming the prism plane of the light guide plate 606 first and then (ii) applying, to a surface of this light guide plate 606 which surface is opposite to the prism plane thus formed, a liquid material that is to constitute the low refractive layer 605.

In such a technique, when the material that is to constitute the low refractive layer 605 is applied, the material that is to constitute the low refractive layer 605, which material has been applied, may flow into the prism plane formed on the light guide plate 606.

If the material that is to constitute the low refractive layer 605 flows into the prism plane of the light guide plate 606 like above, an indented pattern of the prism plane formed in advance on the light guide plate 606 is destroyed. This would cause a defect.

As described above, the light guide of Patent Literature 1 has a problem in which the indented pattern of the prism plane is prone to defects.

The present invention has been made in view of the above problem, and an object of the present invention is to form, while preventing defects, indented patterns on the front and back surfaces of an optical laminate constituted by a stack of a plurality of layers.

### Solution to Problem

In order to attain the above object, an optical laminate of the present invention is an optical laminate having a first indented pattern on its front surface and a second indented pattern on its back surface, said optical laminate, including: a first optical member including the first indented pattern; a second optical member including the second indented pattern; and a middle layer provided between the first optical member and the second optical member, the second optical member being less in film thickness than the first optical member, and the second optical member having a glass transition point lower than a glass transition point of the first optical member.

According to the configuration, the film thickness of the second optical member is less than the film thickness of the first optical member. This makes it possible to reduce the film thickness of the optical laminate as a whole.

Further, according to the configuration, the second optical member has a glass transition point lower than that of the first optical member. Accordingly, the configuration makes it possible to allow the temperature of heat applied to transfer the indented pattern to form the indented pattern on the second optical member (such a temperature is hereinafter referred to as a thermal transfer temperature) to be lower than the thermal transfer temperature for forming the indented pattern of the first optical member (such a way of transferring and forming the indented pattern is hereinafter referred to as thermal transfer).

This makes it possible to prevent the middle layer provided between the first optical member and the second optical member from being affected by heat applied to form the indented pattern on the second optical member. As such, it is possible to prevent defects from occurring in the middle layer.

This makes it possible to form the indented patterns on the respective first and second optical members, after stacking a material constituting the first optical member, the middle layer, and a material constituting the second optical member.

This makes it unnecessary to stack the materials constituting the optical laminate after forming the indented patterns. Accordingly, it is possible to prevent defects from occurring, e.g., prevent already-formed indented patterns from being destroyed.

As such, it is possible to form the indented patterns on the front and back surfaces while preventing occurrence of defects.

A production method for an optical laminate of the present invention is a method of producing an optical laminate having a first indented pattern on its front surface and a second indented pattern on its back surface, the optical laminate comprising a first optical member including the first indented pattern, a second optical member including the second indented pattern, and a middle layer provided between the first optical member and the second optical member, said method, including the steps of: stacking the middle layer on a first planar member, the first planar member serving as the first optical member after the first indented pattern is formed on the front surface; and stacking a second planar member on the first planar member via the middle layer so that the second planar member is less in film thickness than the first planar member, the second planar member (i) serving as the second optical member after the second indented pattern is formed on the back surface and (ii) being made from a material having a glass transition point lower than a glass transition point of the first planar member.

According to the configuration, the second planar member is formed so as to be less in film thickness than the first planar member. Accordingly, the film thickness of the second optical member is less than the film thickness of the first optical member. This makes it possible to reduce the film thickness of the optical laminate as a whole.

Further, according to the configuration, the second planar member has a glass transition point lower than that of the first planar member. Therefore, when the indented patterns are formed on the respective first and second planar members by thermal transfer, the indented pattern on the second planar member can be formed even in a case where the temperature for the second planar member that is less in film thickness than the first planar member is set to low.

This makes it possible to prevent the middle layer provided between the first planar member and the second planar member from being affected by heat applied to form the indented pattern on the second planar member. As such, it is possible to prevent defects from occurring in the middle layer.

This makes it possible to form the indented patterns on the respective first and second planar members, after stacking a material constituting the first planar member, the middle layer, and a material constituting the second planar member.

This makes it unnecessary to stack the materials constituting the optical laminate after forming the indented patterns. Accordingly, it is possible to prevent defects from occurring, e.g., prevent already-formed indented patterns from being destroyed.

As such, it is possible to form the indented patterns on the front and back surfaces while preventing occurrence of defects.

### Advantageous Effects of Invention

In order to attain the above object, an optical laminate of the present invention is an optical laminate having a first indented pattern on its front surface and a second indented pattern on its back surface, said optical laminate, including: a first optical member including the first indented pattern; a second optical member including the second indented pattern; and a middle layer provided between the first optical member and the second optical member, the second optical member being less in film thickness than the first optical member, and the second optical member having a glass transition point lower than a glass transition point of the first optical member.

In order to attain the above object, a production method for an optical laminate of the present invention is a method of producing an optical laminate having a first indented pattern on its front surface and a second indented pattern on its back surface, the optical laminate comprising a first optical member including the first indented pattern, a second optical member including the second indented pattern, and a middle layer provided between the first optical member and the second optical member, said method, including the steps of: stacking the middle layer on a first planar member, the first planar member serving as the first optical member after the first indented pattern is formed on the front surface; and stacking a second planar member on the first planar member via the middle layer so that the second planar member is less in film thickness than the first planar member, the second planar member (i) serving as the second optical member after the second indented pattern is formed on the back surface and (ii) being made from a material having a glass transition point lower than a glass transition point of the first planar member.

This brings about an effect of being able to form, while preventing occurrence of defects, indented patterns on the front surface and the back surface of an optical laminate that is constituted by a stack of a plurality of layers.

### Brief Description of Drawings

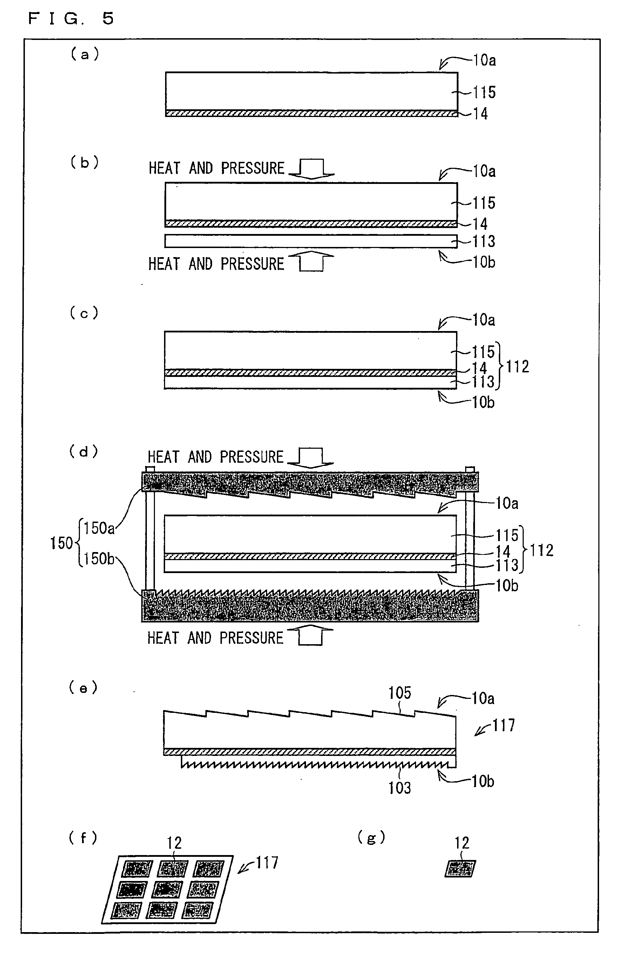

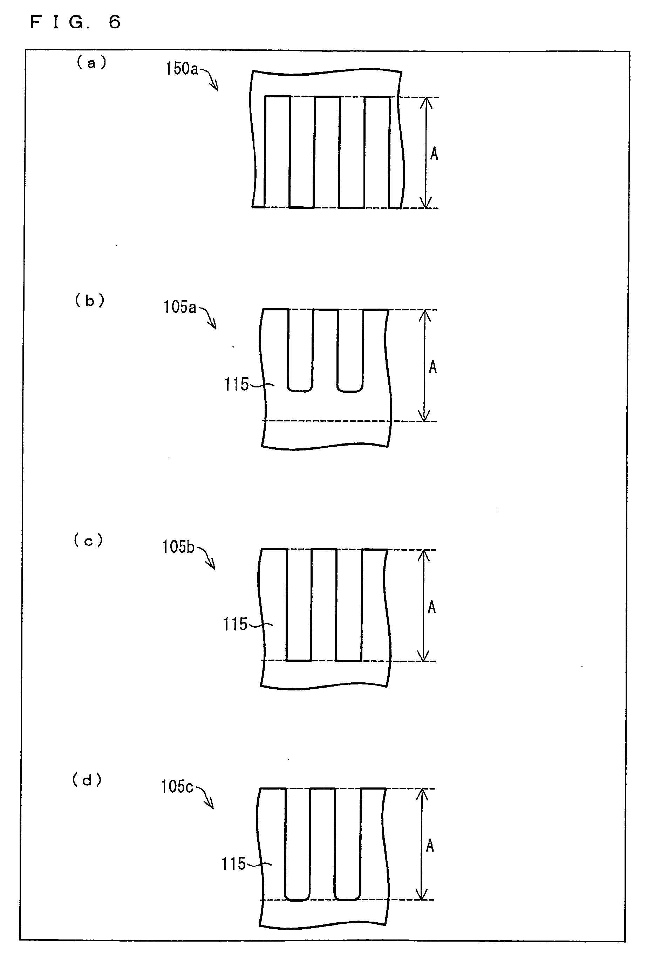

Fig. 1

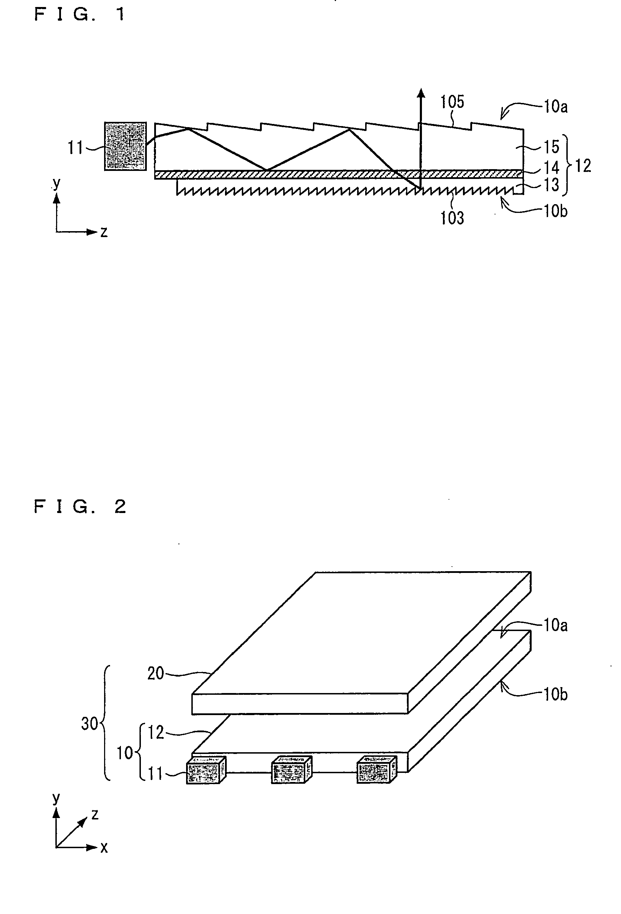

   Fig. 1 is a cross-sectional view illustrating a configuration of a backlight in accordance with an embodiment of the present invention.
Fig. 2
   Fig. 2 is a cross-sectional view illustrating a configuration of a liquid crystal display device in accordance with an embodiment of the present invention.
Fig. 3

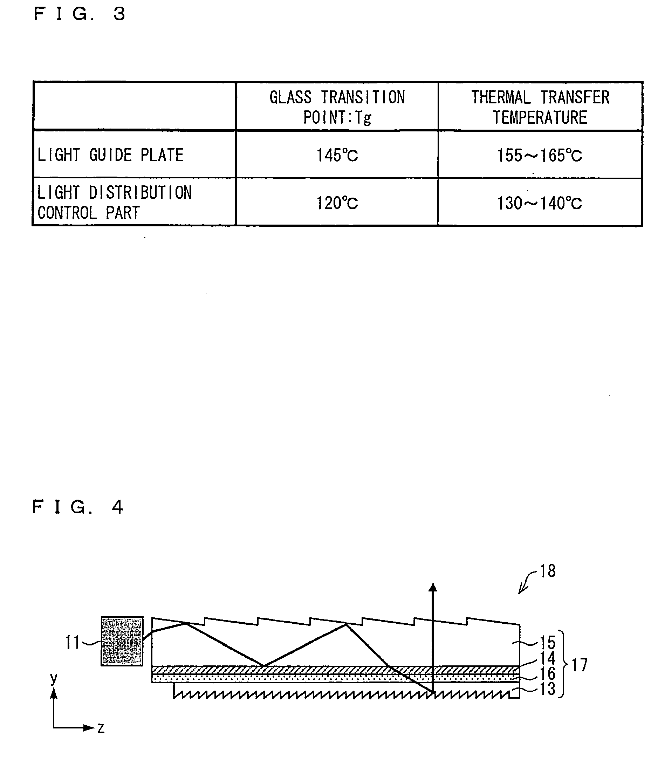

   Fig. 3 is a view showing a relationship between the glass transition point and the thermal transfer temperature of a light guide plate and of a light distribution control part, which are observed in a case where the light guide plate of a light guide of the present embodiment is made from polycarbonate.
Fig. 4
   Fig. 4 is a cross-sectional view illustrating a configuration of a backlight in accordance with an embodiment of the present invention, which backlight includes a light guide consisting of four layers.
Fig. 5
   (a) of Fig. 5 is a view illustrating how a light guide plate material and a low refractive index layer are stacked. (b) of Fig. 5 is a view illustrating how a light distribution control part material is pressed against the low refractive index layer to be joined to the low refractive index layer. (c) of Fig. 5 is a view illustrating a light guide sheet constituted by a stack of the light guide plate material, the low refractive index layer and the light distribution control part material. (d) of Fig. 5 is a view illustrating how indented patterns are formed by thermal imprinting on the light guide sheet shown in (c) of Fig. 5. (e) of Fig. 5 is a view illustrating a light guide in the form of a sheet, in which the indented patterns are formed on both the front and back surfaces. (f) of Fig. 5 is a view illustrating how the light guide in the form of a sheet shown in (e) of Fig. 5 is cut into pieces each having a single pattern. (g) of Fig. 5 is a view illustrating how a completed light guide looks.
Fig. 6
   (a) of Fig. 6 is a cross-sectional view illustrating an indented pattern on a metallic mold for carrying out thermal transfer. (b) of Fig. 6 is a cross-sectional view illustrating an indented pattern thermally transferred from the metallic mold shown in (a) of Fig. 6 at a low temperature. (c) of Fig. 6 is a cross-sectional view illustrating an indented pattern thermally transferred from the metallic mold shown in (a) of Fig. 6 at an optimum temperature. (d) of Fig. 6 is a cross-sectional view illustrating an indented pattern thermally transferred from the metallic mold shown in (a) of Fig. 6 at a high temperature.
Fig. 7
   Fig. 7 is a view illustrating a configuration of a conventional side edge type backlight.
Fig. 8
   Fig. 8 is a view illustrating a configuration of a liquid crystal display device including a light guide shown in Patent Literature 1.
Fig. 9
   (a) to (c) of Fig. 9 are views illustrating a method of producing the light guide shown in Fig. 8. (a) of Fig. 9 is a view illustrating how a low refractive layer is placed on a light guide plate. (b) of Fig. 9 is a view illustrating how a resin that is to be formed into a light distribution control part is applied to the low refractive layer. (c) of Fig. 9 is a view illustrating how a completed light guide looks.
Fig. 10
   (a) to (c) of Fig. 10 are views illustrating a method of producing the light guide shown in Fig. 8. (a) of Fig. 10 is a view illustrating how a light guide plate and a light distribution control part are arranged. (b) of Fig. 10 is a view illustrating how a resin that is to constitute a low refractive layer is applied. (c) of Fig. 10 is a view illustrating how a completed light guide looks.

### Description of Embodiments

The following description discusses embodiments of the present invention in detail.

### (Outline of liquid crystal display device)

Fig. 2 is a perspective view illustrating a configuration of a liquid crystal display device 30 in accordance with the present embodiment.

As illustrated in Fig. 2, the liquid crystal display device 30 includes a liquid crystal display panel 20 and a backlight 10 (illuminating device). The liquid crystal display panel 20 has a display screen for displaying an image. The backlight 10 emits light in the form of a plane to the liquid crystal display panel 20. A plurality of pixels for displaying an image are arranged in the liquid crystal display panel 20. The liquid crystal display panel 20 used here can be a known liquid crystal display panel.

The backlight 10 includes a plurality of light sources 11 and a light guide 12 (optical laminate) that is arranged so as to face the liquid crystal display panel 20. The backlight 10 is a side edge type backlight which is configured such that (i) the light sources 11 are arranged on a side surface side of the light guide 12 and (ii) light emitted from the light sources 11 is guided by the light guide 12 so as to be emitted through a light outgoing surface of the light guide 12 to illuminate the liquid crystal display panel 20.

A surface of the backlight 10 which surface faces the liquid crystal display panel 20 (i.e., a light outgoing surface) is referred to as a front surface 10a, and a surface opposite to the front surface 10a is referred to as a back surface 10b.

The light guide 12 is substantially a rectangular parallelepiped. The light guide 12 is basically constituted by sandwiching, between pieces of transparent polycarbonate which is a thermoplastic resin for use as an optical material, a low refractive material that is lower in refractive index than the polycarbonate.

Note here that, for convenience of description, an X axis, a Y axis and a Z axis, which intersect at right angles one another, are defined as shown in Fig. 2. The X axis direction is a direction in which the light sources 11 are arranged. The Y axis is a direction of the thickness of the light guide 12 (backlight 10). The Y axis direction is also a direction in which the backlight 10 emits light in the form of a plane. The Z axis direction is a direction of optical axes of the light sources 11.

It is assumed in the present embodiment that the light guide 12 is a rectangular parallelepiped, and a direction of the short sides of the front surface 10a and the back surface 10b of the light guide 12 is the X axis direction and a direction of the long sides thereof is the Z axis direction.

### (Outline of backlight)

The following description discusses, with reference to Fig. 1, a configuration of the backlight 10 in detail.

Fig. 1 is a cross-sectional view illustrating a configuration of the backlight 10 in accordance with the present embodiment.

Fig. 1 is a cross-sectional view taken along Y-Z plane of the backlight 10.

The light guide 12 includes a light distribution control part 13 (second optical member), a low refractive index layer 14 (middle layer) and a light guide plate 15 (first optical member), which are stacked in this order from the back surface 10b to the front surface 10a.

The front surface 10a of the backlight 10 (in other words, the front surface 10a of the light guide plate 15) and the back surface 10b of the backlight 10 (in other words, the back surface 10b of the light distribution control part 13) serve as prism planes on which a pattern of protrusions and indentations (such a pattern is hereinafter referred to as an indented pattern) 105 and an indented pattern 103 are formed, respectively.

The indented pattern 105 formed on the front surface 10a of the light guide plate 15 and the indented pattern 103 formed on the back surface 10b of the light distribution control part 13 are formed concurrently by thermal transfer (thermal imprinting), after the light distribution control part 13, the low refractive index layer 14 and the light guide plate 15 are stacked. The details thereof are discussed later.

Both (i) a surface of the light guide plate 15 which surface is opposite to the front surface 10a and (ii) a surface of the light distribution control part 13 which surface is opposite to the back surface 10b are in contact with the low refractive index layer 14, which is made from a material having a refractive index lower than those of the light guide plate 15 and the light distribution control part 13. That is, the light distribution control part 13, the low refractive index layer 14 and the light guide plate 15 are stacked on top of each other so as to be in contact with each other not through an air layer.

According to the backlight 10 configured like above, as indicated by the arrow shown in Fig. 1, light emitted from the light sources 11 and having entered the light guide plate 15 is reflected and diffused by (i) the indented pattern 105 formed on the prism plane serving as the front surface 10a of the light guide plate 15 and (ii) the low refractive index layer 14. This allows the light to be guided inside the light guide plate 15. Further, part of the light reflected by the indented pattern 105 may pass through the low refractive index layer 14, depending on the angle of incidence on the low refractive index layer 14 (i.e., an angle between the light and the normal to the low refractive index layer 14). Light thus passed through the low refractive index layer 14 is reflected by the indented pattern 103, which is formed on the prism plane serving as the back surface 10b of the light distribution control part 13. The light thus reflected by the indented pattern 103 passes through the low refractive index layer 14 and the light guide plate 15, and then travels out of the light guide 12 through the front surface 10a serving as the light outgoing surface.

In this way, the backlight 10 serves as a surface light source. The following description discusses each constituent of the backlight 10 in detail.

### (Light source)

Each of the light sources 11 is constituted by for example an LED. The LED constituting each of the light sources 11 may be an LED that emits white light. Alternatively, three LEDs emitting red light, green light and blue light, respectively, may constitute a single light source 11.

The light sources 11 are arranged along a side surface of the light guide plate 15 at a distance from the light guide plate 15. Since the light sources 11 are arranged at a distance from the light guide plate 15 like above, it is possible to allow light emitted from the light sources 11 to be sufficiently diffused and then enter the light guide plate 15.

In order to reduce the film thickness of the backlight 10, it is preferable that the thickness (distance in the Y axis direction) of each of the light sources 11 be as small as possible. It is assumed in the present embodiment that each of the light sources 11 is constituted by a thin film LED and is approximately 0.4 mm in thickness.

### (Light guide plate)

The light guide plate 15 guides light emitted from the light sources 11 so as to allow the light to be emitted in the form of a plane through the front surface 10a, which is the light outgoing surface. The light guide plate 15 is made from a transparent, thermoplastic resin material that has a high refractive index.

The refractive index of the light guide plate 15 is preferably equal to or greater than 1.42, and further preferably between 1.59 and 1.65. In a case where the light guide plate 15 is made of polycarbonate, the refractive index of the light guide plate 15 is approximately 1.59.

For example, polyethylene terephthalate, which is a material having a refractive index of 1.65, can be used.

A material having a refractive index of 1.42 can be obtained by for example incorporating (blending) a fluorine-containing material into PMMA (acrylic). Such a material is used for a clad polymer material etc.

The indented pattern 105 formed on the front surface 10a of the light guide plate 15 is configured so as to gradually change the angle at which light is guided.

The indented pattern 105 has protrusions and indentations arranged such that the angle of incidence of light emitted from the light sources 11 on the low refractive index layer 14 (i.e., an angle between the light and the normal to the low refractive index layer 14) decreases as a distance from the light sources 11 increases.

For example, the indented pattern 105 has a saw tooth shape that is made up of a plurality of protrusions and indentations arranged in the front surface 10a. The protrusions and indentations include (i) inclined surfaces each of which is inclined so that the film thickness of the light guide plate 15 decreases as a distance from the light sources 11 increases and (ii) vertical surfaces each of which is perpendicular to the optical axes of the light sources 11.

This allows light emitted from the light sources 11 to be guided inside the light guide plate 15 in the following manner. That is, the light having entered the light guide plate 15 through the side surface of the light guide plate 15 is repeatedly reflected by the indented pattern 105 and by the interface between the light guide plate 15 and the low refractive index layer 14, thereby the light is guided inside the light guide plate 15 so that the angle of incidence on the low refractive index layer 14 gradually decreases.
Then, when the angle of incidence on the low refractive index layer 14 becomes smaller than a given angle, the light enters the low refractive index layer 14.

Since the front surface 10a of the light guide plate 15 serves as a prism plane on which the indented pattern 105 is formed like above, it is not necessary to provide a diffusing film and a light concentration film such as BEF on the front surface 10a of the light guide plate 15.

It should be noted that the indented pattern 105 is not limited to the saw tooth shape as described above. For example, the indented pattern 105 can be an indented pattern having rectangular cross sections or can be an indented pattern that is constituted by a pattern having semiround cross sections.

The angle of incidence on the low refractive index layer 14 is an angle between light and the normal (a straight line parallel to the Y axis) to the low refractive index layer 14.

Further, in a case where the light guide plate 15 used here is made from general polycarbonate, its glass transition point Tg is approximately 145°C.

The indented pattern 105 of the light guide plate 15 is formed by thermal transfer by applying heat having a temperature higher than the glass transition point of the light guide plate 15.

The thermal transfer temperature, which can cause a material to be fluid, varies depending on pressure to be applied. The upper limit of the thermal transfer temperature is the highest of the temperatures at which it is possible to accurately and correctly transfer an indented pattern. On the other hand, the lower limit of the thermal transfer temperature is the lowest of the temperatures at which it is possible to transfer a desired indented pattern.

Generally, in a case of a resin material, the softening point of the resin material is higher than the glass transition point Tg by 10°C to 20°C, although the extent depends on the shape of the indented pattern and the thickness of the resin material. Therefore, by setting the lower limit of the thermal transfer temperature to a temperature higher than the glass transition point Tg by 10°C, it is possible to transfer a desired indented pattern. Further, by setting the upper limit of the thermal transfer temperature to a temperature higher than the glass transition point Tg by 20°C, it is possible to accurately and correctly transfer the indented pattern.

For example, in a case where the glass transition point Tg is 145°C, the indented pattern 105 is formed on the front surface 10a of the light guide plate 15 at a thermal transfer temperature between approximately 155°C and 165°C.

In order to reduce the film thickness of the light guide 12, it is preferable that the light guide plate 15 have as small a film thickness as possible. Note however that, in view of preventing a reduction in efficiency of use of light emitted from the light sources 11 arranged on the side surface side of the light guide plate 15, the thickness of the light guide plate 15 is preferably not smaller than the thickness (i.e., a distance in the Y axis direction) of the light sources 11, and is preferably substantially equal to the thickness of the light sources 11. In the present embodiment, the thickness of the light guide plate 15 is approximately 0.4 mm.

Examples of a material for the light guide plate 15 used here, other than polycarbonate, include: polyester polymers such as polyethylene terephthalate and polyethylene naphthalate; acrylic polymers such as polymethyl methacrylate; styrene polymers such as polystyrene and acrylonitrile-styrene copolymers (AS resin); polycarbonate polymers; polyolefin polymers each having a norbornene structure; polyarylate polymers; and polysulfone polymers. In particular, it is preferable to use, as an optical material, a polycarbonate polymer and/or an acrylic polymer such as polymethyl methacrylate for the light guide plate 15.

### (Low refractive index layer)

The low refractive index layer 14 is made from a transparent resin material that has a refractive index lower than that of the light guide plate 15. Further, the low refractive index layer 14 is made from a transparent resin material that has a refractive index lower than or equal to that of the light distribution control part 13.

In a case of making the low refractive index layer 14 from a material that has a refractive index equal to that of the light distribution control part 13, the material used here can be for example a material in the form of polysiloxane. This makes it possible to form the low refractive index layer 14 having a refractive index of approximately 1.42. An example of such a material constituting the low refractive index layer 14 is a coating material produced by TORAY.

It is preferable that the refractive index of the low refractive index layer 14 be less than 1.42, and further preferably between 1.30 and 1.35. The low refractive index layer 14 can be made from for example fluorine acrylate. This makes it possible to achieve a refractive index of approximately 1.35.

For example, it is possible to form the low refractive index layer 14 having a refractive index of 1.30, by using a material obtained by mixing porous silica fine particles into a binder (dispersion).

In order to reduce the thickness of the entire light guide 12 and to achieve optical specifications such as high transmittance and low haze value, it is preferable that the thickness of the low refractive index layer 14 be equal to or smaller than 1 µm.

Note here that, according to the light guide 12, since the light distribution control part 13 provided on the back surface of the low refractive index layer 14 is made from a material that has a Tg lower than that of the light guide plate 15 provided on the front surface of the low refractive index layer 14, it is possible to allow the thermal transfer temperature for forming the indented pattern 103 on the light distribution control part 13 to be a lower temperature. This makes it possible to prevent the indented pattern 103 to be formed on the light distribution control part 13 from being transferred to the light guide plate 15 via the low refractive index layer 14, even if the lower refractive index layer 14 is as thin as approximately 1 µm or less.

It is preferable that the low refractive index layer 14 be made from a curable resin such as a UV curable resin or a thermosetting resin. This achieves the following. That is, by curing in advance the low refractive index layer 14 by applying UV or heat thereto before forming the indented pattern 103 by thermal transfer on the light distribution control part 13 that is less in thickness than the light guide plate 15, it is possible to prevent the indented pattern 103 from being transferred also to the low refractive index layer 14 via the light distribution control part 13.

The low refractive index layer 14 can be made for example from OPSTAR (product name) produced by JSR etc.

### (Light distribution control part)

The light distribution control part 13 is the one for causing light having passed through the low refractive index layer 14 to rise. That is, the light distribution control part 13 is the one for reflecting the light in a direction perpendicular to a film surface of the low refractive index layer 14 so that the light travels out of the light guide 12 through the front surface 10a serving as the light outgoing surface of the light guide 12. To this end, the light distribution control part 13 is configured such that its back surface 10b, which is opposite to a surface in contact with the low refractive index layer 14, is a prism plane on which the indented pattern 103 is formed.

For example, the indented pattern 103 has a saw tooth shape that is made up of a plurality of protrusions and indentations arranged in the front surface 10b. The protrusions and indentations include (i) inclined surfaces each of which is inclined so that the film thickness of the light distribution control part 13 decreases as a distance from the light sources 11 increases and (ii) vertical surfaces each of which is perpendicular to the optical axes of the light sources 11. Each of the inclined surfaces of the indented pattern 103 is at an angle of approximately 45 degrees to the X-Y plane, and totally reflects, in substantially the Y axis direction, light having traveled from the light guide plate 15 through the low refractive index layer 14. This makes it possible to emit, from the light outgoing surface of the backlight 10 in the form of a plane, light emitted from the light sources 11 each of which is a point light source.

Since the back surface 10b of the light distribution control part 13 serves as a prism plane on which the indented pattern 103 is formed like above, it is not necessary to provide a reflecting plate etc. on the back surface 10b of the light distribution control part 13.

It should be noted that the indented pattern 103 is not limited to the saw tooth shape as described above. For example, the indented pattern 103 may be an indented pattern having rectangular cross sections or may be an indented pattern that is constituted by a pattern having semiround cross sections.

The light distribution control part 13 is configured so as to be less in thickness than the light guide plate 15.

It is preferable that the light distribution control part 13 be approximately several tens of micrometers to 0.1 mm in thickness. This makes it possible to reduce the film thickness of the light guide 12.

It should be noted that the thickness of the light distribution control part 13 is not limited to the above. The function of the light distribution control part 13 is to bring light back into the light guide plate 15, which light is about to travel downward (to the back surface 10b side) from the light guide 12. The shape of the indented pattern 103 and the thickness of the light distribution control part 13, which are necessary to achieve this function, can be set as appropriate depending on the pattern of the light outgoing surface and the thickness of the light guide 15.

As described earlier, it is necessary that the light guide plate 15 be substantially equal in thickness to the light sources 11 arranged on the side surface side of the light guide plate 15. In view of this, reducing the thickness of the light distribution control part 13 makes it possible to reduce the thickness of the entire light guide 12. Accordingly, it is possible to configure the backlight 10 which is small in thickness.

Further, during production of the backlight 10, the film thickness of a sheet that is to be cut into light guides 12 is reduced. This makes it possible to reduce the size of space required when the sheet is transported in the form of a roll, and thus possible to reduce transportation costs.

It is preferable that the refractive index of the light distribution control part 13 be equal to or higher than the refractive index of the low refractive index layer 14, and further preferably between 1.59 and 1.65.

For example, it is possible to allow the light distribution control part 13 to have a refractive index of 1.59 by making the light distribution control part 13 from PC (polycarbonate). Further, for example, it is possible to allow the light distribution control part 13 to have a refractive index of 1.65 by making the light distribution control part 13 from polyethylene terephthalate.

In particular, by causing the light distribution control part 13 to have a refractive index higher than that of the low refractive index layer 14, it is possible to prevent light having entered the low refractive index layer 14 from being totally reflected by the interface between the low refractive index layer 14 and the light distribution control layer 13, and thus possible to allow the light to enter the light distribution control part 13. Then, the light having entered the light distribution control part 13 from the low refractive index layer 14 is totally reflected by the indented pattern 103, passes through the low refractive index layer 14 and the light guide plate 15, and then travels out through the front surface 10a serving as the light outgoing surface.

This makes it possible to cause the light guide 12 to function as a light guide that emits, in the form of a plane, light emitted from the light sources 11 each of which is a point light source.

Further, the light distribution control part 13 is made from a transparent resin material that has a glass transition point Tg lower than that of the resin material constituting the light guide plate 15.

This makes it possible to allow the thermal transfer temperature for forming the indented pattern 103 by thermal transfer on the back surface 10b of the light distribution control part 13 to be lower than the thermal transfer temperature for forming the indented pattern 105 by thermal transfer on the front surface 10a of the light guide plate 15. Since the thermal transfer temperature for forming the indented pattern 103 on the light distribution control layer 103 is lower than the thermal transfer temperature for forming the indented pattern 105 on the light guide plate 15, when carrying out thermal transfer of the indented pattern 103, it is possible to prevent, even if the thickness of the light distribution control part 13 is less than that of the light guide plate 15, the material constituting the low refractive index layer 14 from becoming fluid due to heat that has reached the low refractive index layer 14 between the light distribution control part 13 and the light guide plate 15.

This makes it possible to (i) stack layers that respectively constitute the light guide plate 15, the low refractive index layer 14 and the light distribution control part 13 and thereafter (ii) form the indented pattern 105 on the front surface 10a and the indented pattern 103 on the back surface 10b.

That is, according to the configuration of the light guide 12, it is possible to (i) stack all the materials that constitute the light guide 12 and thereafter (ii) form the indented pattern 105 on the front surface 10a and the indented pattern 103 on the back surface 10b.

That is, according to the configuration of the light guide 12, it is not necessary to form the indented pattern 105 on the front surface 10a or the indented pattern 103 on the back surface 10b before stacking the materials which constitute the light guide 12. As such, it is possible to prevent an already-formed indented pattern 105 or an already-formed indented pattern 103 from being destroyed by the material(s) which constitutes the light guide 12.

Further, it is possible to concurrently form, by thermal transfer, the indented pattern 105 on the front surface 10a and the indented pattern 103 on the back surface 10b. This makes it possible to form the indented pattern 105 and the indented pattern 103 in a single production step, and thus possible to suppress processing costs.

Furthermore, in consideration of a weathering test for the light guide plate 15, it is preferable that the light distribution control part 13 be made from a resin material having a glass transition point Tg of 90°C or higher. This makes it possible to prevent the light distribution control part 13 from deforming due to heat when the light guide 12 is used as a backlight 10. Accordingly, it is possible to configure a backlight 10 that is highly reliable under heat.

Moreover, it is preferable that the light distribution control part 13 be made from a material whose glass transition point Tg is lower than the glass transition point Tg of the light guide plate 15 by 25°C or greater.

This makes it possible to sufficiently increase a difference between the thermal transfer temperature for forming the indented pattern 105 on the light guide plate 15 and the thermal transfer temperature for forming the indented pattern 103 on the light distribution control part 13. Accordingly, it is possible to increase a margin for heat during the production step in which the indented patterns 105 and 103 are formed. As such, it is possible to further ensure that the low refractive index layer 14 is not affected by heat that is applied to form the indented pattern 103 on the light distribution control part 13. This makes it possible to further ensure that defects due to heat do not occur in the low refractive index layer 14.

For example, in a case where the light guide plate 15 is made from polycarbonate whose glass transition point Tg is 145°C, the light distribution control part 13 is preferably made from a resin material whose glass transition point Tg is approximately 120°C. Examples of the resin material whose glass transition point Tg is approximately 120°C include acrylic polymers such as polymethyl methacrylate whose glass transition point Tg is 117°C (refractive index thereof is 1.49).

The light distribution control part 13 may be made from a material whose glass transition point Tg is lower. Examples of such a material include copolymers of methyl methacrylate monomers and/or methyl acrylate monomers.

Further, TECHNOLOY (product name, produced by Sumitomo Chemical Co., Ltd.) in the form of a laminated film may be used as the light distribution control part 13. In this case, the glass transition point Tg is between 96°C and 107°C. Note that the refractive index of the TECHNOLOY (product name, produced by Sumitomo Chemical Co., Ltd.) is 1.49.

The thermal transfer temperature for forming the indented pattern 103 of the light distribution control part 13 is higher than the glass transition point of the light distribution control part 13. For example, in a case where the light distribution control part 13 is made from a resin material whose glass transition point Tg is approximately 120°C, the thermal transfer temperature for forming the indented pattern 103 on the back surface 10b of the light distribution control part 13 is set to between approximately 130°C and 140°C.

In a case where the light distribution control part 13 is made from a material whose glass transition point Tg is 90°C, the thermal transfer temperature for forming the indented pattern 103 is set to between approximately 100°C and 110°C.

The low-Tg material having a glass transition point of as low as approximately 90°C used here is for example acrylic SMIPEX (product name, produced by Sumitomo Kagaku Zairyo). Examples of a binder material that can be used here include: epoxy resin, phenol resin, melamine resin, alkyd resin, and acrylic resin. Specifically, the material is obtained by (i) mixing acrylate monomers and a photoinitiator to acrylic resin (acrylate can be replaced by urethane acrylate or epoxy acrylate etc.) and then (ii) curing the mixture with UV light.

Further, as described earlier, the thermal transfer temperature, which can cause a material to be fluid, varies depending on pressure to be applied. The upper limit of the thermal transfer temperature for the light distribution control part 13 is the highest of the temperatures at which it is possible to accurately and correctly transfer an indented pattern. On the other hand, the lower limit of the thermal transfer temperature for the light distribution control part 13 is the lowest of the temperatures at which it is possible to transfer a desired indented pattern.

Although the extent depends on the shape of the indented pattern and the thickness of the material, by setting the lower limit of the thermal transfer temperature for the light distribution control part 13 to a temperature higher than the glass transition point Tg of the light distribution control part 13 by 10°C, it is possible to cause the thermal transfer temperature to fall within the range of softening point of the material for the light distribution control part 13, and thus possible to transfer a desired indented pattern. Further, by setting the upper limit of the thermal transfer temperature for the light distribution control part 13 to a temperature higher than the glass transition point Tg of the light distribution control part 13 by 20°C, it is possible to cause the thermal transfer temperature to fall within the range of softening point of the material for the light distribution control part 13, and thus possible to accurately and correctly transfer the indented pattern.

By configuring the light distribution control part 13 so that it has a glass transition point of 90°C, it is possible to prevent the light distribution control part 13 from being affected by a temperature of a high temperature test of general product reliability testing.

Further, even if the thermal transfer temperature for the light guide plate 15 is set to for example 150°C, the heat of the thermal transfer temperature is less likely to reach the interface between the light guide plate 15 and the low refractive index layer 14 because the light guide plate 15 is relatively thick, e.g., approximately 0.4 mm in thickness. On the other hand, heat of the thermal transfer temperature for the light distribution control part 13, which is relatively thin (e.g., approximately several tens of micrometers to 0.1 mm in thickness), is more likely to reach the interface between the light distribution control part 13 and the low refractive layer 14.

In view of such circumstances, configuring the light distribution control part 13 so that the light distribution control part 13 has a glass transition point Tg of 90°C makes it possible to reduce the thermal transfer temperature for the light distribution control part 13. In a case where the thermal transfer temperature for the light distribution control part 13 is set to between approximately 100°C and 110°C, the temperature of heat that actually reaches the low refractive index layer 14 is substantially around 100°C to 110°C, which is the thermal transfer temperature applied to the light distribution control part 13. This makes it possible to suppress occurrence of defects due to heat in the low refractive index layer 14.

Further, configuring the light distribution control part 13 so that the light distribution control part 13 has a glass transition point Tg of 90°C or greater makes it possible, in a case where the light guide 12 is used in the backlight 10, to prevent the light distribution control part 13 from deforming due to heat.

That is, it is necessary that materials that can be used for the light guide plate 15 and the light distribution control part 13 satisfy the following temperature gradient:
Thermal transfer temperature for light guide plate 15 > Glass transition point Tg of light guide plate 15 > Thermal transfer temperature for light distribution control part 13 > Glass transition point Tg of light distribution control part 13.

For example, in a case where the light guide plate 15 is made from polycarbonate, the glass transition point Tg and the thermal transfer temperature of the light guide plate 15 and of the light distribution control part 13 are in such a relationship as shown in Fig. 3.

Fig. 3 is a view showing a relationship between the glass transition point Tg and the thermal transfer temperature of the light guide plate 15 and of the light distribution control part 13, which are observed in a case where the light guide plate 15 is made from polycarbonate.

### (Modified example of backlight 10)

Alternatively, the low refractive index layer 14 and the light distribution control part 13 may be joined together with an adhesion layer 16 (see Fig. 4).

Fig. 4 is a view illustrating a configuration of a backlight 18 including a light guide 12 that consists of 4 layers. The backlight 18 shown in Fig. 4 is different from the backlight 10 in that it includes this light guide 12 in place of the light guide 12 of the backlight 10.

The light guide 12 is constituted by the light distribution control part 13 and the low refractive index layer 14 which are on the light guide plate 15, and the adhesion layer 16 that is provided between the light distribution control part 13 and the low refractive index layer 14. That is, the light guide 12 consists of the following four layers: the light distribution control part 13, the adhesion layer 16, the low refractive index layer 14 and the light guide plate 15 which are stacked in this order from the back surface 10b. Depending on which material is used to make the low refractive index layer 14, it may be necessary to provide the adhesion layer 16 between the low refractive index layer 14 and the light distribution control part 13 to join them together.

In order to control the direction from which light enters through the low refractive index layer 14 and to control the direction in which light reflected by the light distribution control part 13 travels, it is necessary that the refractive index of the adhesion layer 16 be higher than that of the low refractive index layer 14 but lower than that of the light distribution control part 13. That is, it is necessary that the refractive index of the adhesion layer 16 satisfy the following inequality:
Refractive index of resin material constituting light distribution control part 13 > Refractive index of material constituting adhesion layer 16 > Refractive index of material constituting low refractive index layer 14.

The adhesion layer 16 is excellent in transparency. Examples of adhesives that can be used as the adhesion layer 16 include: polyurethane adhesives and epoxy adhesives each of which is obtained by adding a curing agent such as an isocyanate group-containing compound to vinyl acetate system, a vinyl chloride copolymer, polyvinyl ether, polyvinyl alcohol, acrylic resin, polyolefin resin, epoxy resin or the like. Further, it is necessary that the adhesion layer 16 do not contain any solvent that will impair properties of materials constituting the low refractive index layer 14 and the light distribution control part 13. The adhesion layer 16 is preferably made from a solventless material.

The refractive index of the adhesion layer 16 needs to be higher than that of the low refractive index layer 14, and is preferably between 1.3 and 1.5. Further, the glass transition point Tg of the adhesion layer 16 needs to be higher than the thermal transfer temperature for the light guide plate 15, and is preferably equal to or higher than 160°C. For example, it is possible to allow the adhesion layer 16 to have a glass transition point Tg of equal to or greater than 160°C, i.e., higher than the glass transition point of the light guide plate 15, by making the adhesion layer 16 from monomers such as acrylamide monomers.

Since the adhesion layer 16 is made from a material that has a glass transition point higher than that of the light guide plate 15, it is possible to prevent the light distribution control part 13 from becoming fluid by heat that (i) is applied to transfer the indented pattern to the front surface of the light guide plate 15, which is provided on the front surface side of the adhesion layer 16, and (ii) reaches via the low refractive index layer 14 the light distribution control part 13, which is provided on the back surface side of the adhesion layer 16.

In addition, since the heat applied to transfer the indented pattern to the front surface of the light guide plate 15 reaches the low refractive index layer 14, it is possible to suppress expansion of the low refractive index layer 14, and thus possible to prevent the properties of a low refractive index material from being impaired.

### (Production method)

The following description discusses the steps for producing the backlight 10, with reference to (a) to (g) of Fig. 5 and (a) to (d) of Fig. 6. (a) of Fig. 5 is a view illustrating how a light guide plate material and a low refractive index layer are stacked. (b) of Fig. 5 is a view illustrating how a light distribution control part material 113 is pressed against the low refractive index layer to be joined to the low refractive index layer. (c) of Fig. 5 is a view illustrating a light guide sheet constituted by a stack of the light guide plate material, the low refractive index layer and the light distribution control part material. (d) of Fig. 5 is a view illustrating how indented patterns are formed by thermal imprinting on the light guide sheet shown in (c) of Fig. 5. (e) of Fig. 5 is a view illustrating a light guide in the form of a sheet, in which the indented patterns are formed on both the front surface and the back surface. (f) of Fig. 5 is a view illustrating how the light guide in the form of a sheet shown in (e) of Fig. 5 is cut into pieces each having a single pattern. (g) of Fig. 5 is a view illustrating how a completed light guide looks.

(a) of Fig. 6 is a cross-sectional view illustrating an indented pattern on a metallic mold for carrying out thermal transfer. (b) of Fig. 6 is a cross-sectional view illustrating an indented pattern thermally transferred from the metallic mold shown in (a) of Fig. 6 at a low temperature. (c) of Fig. 6 is a cross-sectional view illustrating an indented pattern thermally transferred from the metallic mold shown in (a) of Fig. 6 at an optimum temperature. (d) of Fig. 6 is a cross-sectional view illustrating an indented pattern thermally transferred from the metallic mold shown in (a) of Fig. 6 at a high temperature.

First, a low refractive index material is applied to a light guide plate material 115 (first planar member). The light guide plate material 115 is made from a transparent resin material, and will serve as the light guide plate 15. The low refractive index material is for example a UV curable resin, and will serve as the low refractive index layer 14. The light guide plate material 115 is a light guide plate 15 on which an indented pattern 105 has not yet been formed on the front surface 10a. That is, the light guide plate material 115 is one that serves as the light guide plate 15 after the indented pattern 105 is formed. Note here that the light guide plate material 115 is polycarbonate which is 0.4 mm in thickness and has a glass transition point Tg of 145°C.

The low refractive index material is applied to a surface, of the light guide plate material 115, which is opposite to the surface (front surface 10a) on which the indented pattern 105 is to be formed. How to apply the low refractive index material to the light guide plate material 115 is not particularly limited. The low refractive index material can be applied by for example bar coater or spin coater etc.

Then, the low refractive index material is cured by irradiation with UV light, and is baked if needed so that the solvent of the low refractive index material applied to the light guide plate material 115 is volatilized. In this way, the low refractive index layer 14 is formed on the back surface of the light guide plate material 115 (see (a) of Fig. 5).

Note here that an adhesion layer may be provided on the back surface of the light guide plate material 115, and an already-prepared low refractive index layer 14 may be joined to the light guide plate material 115 with the adhesion layer.

Next, the light distribution control part material 113 (second planar member) is bonded to the low refractive index layer 14 so that the low refractive index layer 14 formed in the previous step is sandwiched between the light guide plate material 115 and the light distribution control part material 113 (see (b) of Fig. 5). The light distribution control part material 113 is made from a transparent resin material, and will serve as the light distribution control part 13.

That is, the light distribution control part material 113 is stacked on the light guide plate material 115 via the low refractive index layer 14.

The light distribution control part material 113 is a light distribution control part 13 on which the indented pattern 103 has not yet been formed on the back surface 10b, and is less in thickness than the light guide plate material 115. The low refractive index layer 14 is bonded to a surface, of the light distribution control part material 113, which is opposite to the back surface 10b. The light distribution control part material 113 used here is polymethyl methacrylate that is several tens of micrometers to 0.1 mm in thickness and has a glass transition point Tg of 117°C.

The bonding is carried out by applying heat having a temperature of as low as approximately 150°C and pressure to the front surface 10a of the light guide plate material 115 and to the back surface 10b of the light distribution control part material 113 so that the low refractive index layer 14 is pressure-bonded to the light distribution control part material 113. The reason why the temperature is as low as approximately 150°C is that, if heat having a temperature of equal to or higher than 160°C is applied, polycarbonate will become fluid and the low refractive index layer 14 which is a curable resin will be affected.

Note that the effect on the low refractive index layer 14 can be suppressed by reducing the period during which pressure is applied. In this case, the pressure is set to be relatively high, i.e., approximately 10 Mpa to 15 Mpa.

This completes a light guide sheet 112 that is constituted by the light distribution control part material 113, the low refractive index layer 14, and the light guide plate material 115 which are stacked in this order (see (c) of Fig. 5). The light guide sheet 112 thus completed can be stored in the form of a roll, because it is small in thickens. Further, the light guide sheet 112 can be supplied roll-to-roll to the step of forming the indented patterns 105 and 103 on the front surface 10a and the back surface 10b.

Next, the indented patterns 105 and 103 are transferred to the front surface 10a and the back surface 10b, respectively, of the light guide sheet 112 (laminate) by thermal imprinting with use of a metallic mold 150 (see (d) of Fig. 5).

In this way, a light guide 117 in the form of a sheet is formed, in which the indented pattern 105 is formed on the front surface 10a and the indented pattern 103 is formed on the back surface 10b (see (e) of Fig. 5). The light guide 117 in the form of a sheet can be stored in the form of a roll, because it is small in film thickness.

The metallic mold 150 includes (i) a metallic mold upper part 150a from which the indented pattern 105 is transferred to the light guide plate material 115 and (ii) a metallic mold lower part 150b from which the indented pattern 103 is transferred to the light distribution control part material 113. The metallic mold upper part 150a and the metallic mold lower part 150b are coupled together.

The light guide sheet 112 is sandwiched between the metallic mold upper part 150a and the metallic mold lower part 150b which are on the front surface 10a side and the back surface 10b side, respectively. Then, heat and pressure are applied from the front surface 10a side and from the back surface 10b side of the light guide sheet 112. This achieves thermal transfer of the indented patterns of the metallic mold upper part 150a and of the metallic mold lower part 150b to the light guide sheet 112.

In order to form the indented pattern 105 on the light guide plate material 115 with use of the metallic mold upper part 150a, the temperature of heat applied to the light guide plate material 115 is set to be higher than the glass transition point of the light guide plate material 115. In order to form the indented pattern 103 on the light distribution control part material 113 with use of the metallic mold lower part 150b, the temperature of heat applied to the light distribution control part material 113 is set to be higher than the glass transition point of the light distribution control part material 113.

This makes it possible, when thermal transfer to the light guide plate material 115 is carried out with use of the metallic mold upper part 150a, to allow only (i) the front surface 10a of the light guide plate material 115 which surface is in contact with the metallic mold upper part 150a and (ii) the vicinity of the front surface 10a to become fluid. Accordingly, it is possible to suppress fluidization of a surface of the light guide plate material 115 which surface is in contact with the low refractive index layer 14 and the vicinity of that surface.

Similarly, it is possible, when thermal transfer to the light distribution control part material 113 is carried out with use of the metallic mold lower part 150b, to allow only (i) the back surface 10b of the light distribution control part material 113 which surface is in contact with the metallic mold lower part 150b and (ii) the vicinity of the back surface 10b to become fluid. Accordingly, it is possible to suppress fluidization of a surface of the light distribution control part material 113 which surface is in contact with the low refractive index layer 14 and the vicinity of that surface.

As described above, it is possible to prevent the resin material for the low refractive index layer 14 from becoming fluid together with the light guide plate material 115 and the light distribution control part material 113. This makes it possible to prevent the low refractive index layer 14, which has poor ductility, from cracking.

Since the light guide plate material 115 used here is polycarbonate having a glass transition point Tg of 145°C, the lower limit and the upper limit of the thermal transfer temperature for transfer of the indented pattern 105 from the metallic mold upper part 150a are 155°C and 165°C, respectively. Further, since the light distribution control part material 113 of the light guide sheet 112 is polymethyl methacrylate having a glass transition point Tg of 117°C, the lower limit and the upper limit of the thermal transfer temperature for transfer of the indented pattern 103 from the metallic mold lower part 150b are 127°C and 137°C, respectively.

When the thermal transfer is carried out, the thermal transfer temperatures for the light guide plate material 115 and for the light distribution control part material 113, which temperatures can cause the light guide plate material 115 and the light distribution control part material 113 to become fluid, are changed according to pressure applied to the light guide plate material 115 and the light distribution control part material 113.

The following description discusses, with reference to (a) to (d) of Fig. 6, thermal transfer temperatures and the shapes of indented patterns to be formed.

It should be noted here that, for convenience of description, the following discusses the case where an indented pattern having rectangular cross sections is thermally transferred to the light guide plate material 115 (see (a) of Fig. 6). The arrow A shown in (a) to (d) of Fig. 6 denotes the length from a top edge to base of the indented pattern formed on the metallic mold upper part 150a. That is, the arrow A denotes a distance from the top edge to the base of an indented pattern that should be formed (i.e., desired indented pattern).

If the thermal transfer temperature is low when the thermal transfer is carried out with respect to the light guide plate material 115 with use of the metallic mold upper part 150a, it is not possible to obtain an indented pattern that should be formed. Instead, an indented pattern 105a in which the distance from the top edge to the base is shorter than the length of the arrow A is formed on the light guide plate material 115 (see (b) of Fig. 6).

If the thermal transfer temperature is within an optimum range when the thermal transfer is carried out with respect to the light guide plate material 115 with use of the metallic mold upper part 150a, it is possible to obtain an indented pattern that should be formed. That is, an indented pattern 105b in which the distance from the top edge to the base is equal to the length of the arrow A is formed on the light guide plate material 115 (see (c) of Fig. 6). Further, on the indented pattern 105b, the shape of the indented pattern of the metallic mold upper part 150a is accurately transferred. For example, bottom surfaces of a base of the indented pattern 105b are flat.

If the thermal transfer temperature is high when the thermal transfer is carried out with respect to the light guide plate material 115 with use of the metallic mold upper part 150a, it is not possible to accurately and correctly obtain an indented pattern that should be formed. For example, an indented pattern 105c is formed on the light guide plate material 115, in which, although the distance from the top edge to the base is substantially equal to the length of the arrow A, bottom surfaces of a base are not flat but instead are curved due to excessive heat applied to the light guide plate material 115 (see (d) of Fig. 6).

In view of such circumstances, when the indented patterns 105 and 103 are formed on the light guide plate material 115 and the light distribution control part material 113, it is preferable that the temperatures of heat applied to the light guide plate material 115 and the light distribution control part material 113 be higher, by not less than 10°C but not more than 20°C, than the grass transition points Tg of the light guide plate material 115 and the light distribution control part material 113, respectively.

That is, in the case of (d) of Fig. 5, (i) the lower limits of the thermal transfer temperatures for thermal transfer using the metallic mold upper part 150a and the metallic mold lower part 150b are higher by 10°C than the glass transition points of the light guide plate material 115 and the light distribution control part material 113, respectively and (ii) the upper limits of the thermal transfer temperatures are higher by 20°C than the glass transition points of the light guide plate material 115 and the light distribution control part material 113, respectively. This makes it possible to carry out thermal transfer of the indented patterns 105 and 103 accurately and correctly.

In this way, the indented pattern 103 is formed on the light guide plate material 115 and the indented pattern 105 is formed on the light distribution control part material 113.

As has been described, the indented patterns 105 and 103 are transferred by sandwiching the light guide sheet 112 by the metallic mold upper part 150a and the metallic mold lower part 150b which are coupled together. This eliminates the need for alignment when the indented pattern 105 is transferred from the metallic mold upper part 105a and alignment when the indented pattern 103 is transferred from the metallic mold lower part 105b. Accordingly, it is possible to reduce manufacturing time and improve productivity. Further, since no equipment for alignment is required, no associated equipment costs are required and thus production cost can be reduced.

Further, since the metallic mold upper part 150a and the metallic mold lower part 150b are coupled together, the indented pattern 105 and the indented pattern 103 do not become misaligned. This makes it possible to maintain stable quality.

Further, while the indented pattern 105 is transferred to the light guide plate material 115 from the metallic mold upper part 150a, the indented pattern 103 is also transferred to the light distribution control part material 113 from the metallic mode lower part 150b. That is, the indented pattern 105 and the indented pattern 103 are concurrently thermally transferred from the metallic mold upper part 150a and the metallic mold lower part 150b, respectively, during a single step. This makes it possible to reduce time taken to form the indented patterns 105 and 103, and thus possible to improve productivity.

It should be noted that, when the indented pattern 105 and the indented pattern 103 are thermally transferred to the front surface 10a and the back surface 10b of the light guide sheet 112, a plurality of different indented patterns may be concurrently transferred to a surface of the light guide sheet 112.

Further, although not illustrated in Fig. 5, in a case where an adhesion layer for joining the light guide plate material 115 and the low refractive index layer 14 is provided between the light guide plate material 115 and the low refractive index layer 14, the adhesion layer thus provided is made from a material that has a glass transition point higher than that of the light guide plate material 115.

This makes it possible to prevent the light distribution control part material 113 from becoming fluid by heat that (i) is applied to transfer the indented pattern 105 to the front surface of the light guide plate material 115 from the metallic mold upper part 105a and (ii) reaches via the low refractive index layer 14 the light distribution control part material 113 which is provided on the other surface side (back surface side) of the adhesion layer.

In addition, since the heat applied to transfer the indented pattern 105 to the front surface of the light guide plate material 115 reaches the low refractive index layer 14, it is possible to suppress expansion of the low refractive index layer 14, and thus possible to prevent the properties of a low refractive index material from being impaired.

Next, the light guide 117 in the form of a sheet is cut into pieces each having a desired indented pattern of the light guide 12 (see (f) of Fig. 5), i.e., cut into solid pieces shown in (g) of Fig. 5. This completes the light guide 12.

Such light guides 12 in the form of solid pieces can be obtained by for example (i) cutting along each side with a cutter or (ii) stamping them out of the sheet with a press.

Then, as illustrated in Fig. 1, the light sources 11 are provided on a side surface side of the light guide 12. This completes the backlight 10. Further, as illustrated in Fig. 2, a known liquid crystal display panel 20 is provided so as to face the light outgoing surface of the backlight 10. This completes the liquid crystal display device 30.

As has been described, the light distribution control part material 113 has a glass transition point lower than that of the light guide plate material 115. Accordingly, even if the temperature of heat applied to the light distribution control part material 113 is lower than that of heat applied to the light guide plate material 115, it is possible to form the indented pattern 103 on the light distribution control part material 113.

This makes it possible to prevent the low refractive index layer 14, which is provided between the light guide plate material 115 and the light distribution control part material 113, from becoming fluid due to heat applied when the indented pattern 103 is thermally transferred to the light distribution control part material 113. Accordingly, it is possible to prevent defects from occurring, e.g., prevent cracks in the low refractive index layer 14 which has poor ductility.

Accordingly, it is possible to stack the light guide plate material 115, the low refractive index layer 14 and the light distribution control part material 113, which are layers constituting the light guide 12, and thereafter form the indented patterns 105 and 103 on the light guide plate material 115 and the light distribution control part material 113, respectively.

Therefore, unlike the configuration as shown in Patent Literature 1, it is not necessary to provide for example the step of forming a prism plane on a surface and thereafter applying a liquid resin material, which serves as another layer, on the other surface. This makes it possible to prevent defects from occurring. For example, it is possible to prevent already-formed indented patterns 105 and 103 from being destroyed when a layer constituting the light guide 12 is formed.

In a case where layers in each of which a prism plane has been formed on a surface are to be bonded together via another layer as shown in Patent Literature 1, air may be enclosed between surfaces to be bonded together when the layers are bonded, depending on the shapes of protrusions and indentations of the already-formed prism planes.

In contrast, according to the light guide 12, the indented patterns 105 and 103 are formed after the layers constituting the light guide 12 are stacked on top of each other. This makes it possible to prevent air from being enclosed when the layers constituting the light guide 12 are stacked on top of each other.

Further, according to the production method in which the layers in each of which the prism plane has been formed on a surface are to be bonded together via another layer as shown in Patent Literature 1, repetitive operations are required. This causes adhesion of contaminations. In contrast, according to the light guide 12, the indented patterns 105 and 103 are formed after the layers are stacked on top of each other. Therefore, no repetitive operations are required unlike the production method as shown in Patent Literature 1, and thus the causes of adhesion of contaminations can be reduced. This reduces causes of occurrence of defects, and thus makes it possible to maintain stable quality.

Further, as described earlier, a difference between the glass transition point of the light guide plate material 115 and the glass transition point of the light distribution control part material 113 is 25°C or greater. This makes it possible to sufficiently increase a difference between the thermal transfer temperature for forming the indented pattern 105 on the light guide plate material 115 and the thermal transfer temperature for forming the indented pattern 103 on the light distribution control part material 113.

Accordingly, a margin for heat is large when the indented patterns 105 and 103 are formed on the light guide plate material 115 and the light distribution control part material 113, respectively. This makes it possible to further ensure that the low refractive index layer 14 is not affected by heat that is applied to form the indented pattern 103 on the light distribution control part material 113.

Further, since the margin for heat is increased when the indented patterns 105 and 103 are formed on the light guide plate material 115 and the light distribution control part material 113, respectively, it is possible to easily find conditions for an optimum production process, which conditions need to be found when the indented patterns 105 and 103 and/or materials for the light guide plate material 115 and the light distribution control part material 113 are changed.

The present invention is not limited to the descriptions of the respective embodiments, but may be altered within the scope of the claims. An embodiment derived from a proper combination of technical means disclosed in different embodiments is encompassed in the technical scope of the invention.

As has been described, an optical laminate of the present invention is an optical laminate having a first indented pattern on its front surface and a second indented pattern on its back surface, said optical laminate, including: a first optical member including the first indented pattern; a second optical member including the second indented pattern; and a middle layer provided between the first optical member and the second optical member, the second optical member being less in film thickness than the first optical member, and the second optical member having a glass transition point lower than a glass transition point of the first optical member.

According to the configuration, the film thickness of the second optical member is less than the film thickness of the first optical member. This makes it possible to reduce the film thickness of the optical laminate as a whole.

Further, according to the configuration, the second optical member has a glass transition point lower than that of the first optical member. Accordingly, the configuration makes it possible to allow the temperature of heat applied to transfer the indented pattern to form the indented pattern on the second optical member (such a temperature is hereinafter referred to as a thermal transfer temperature) to be lower than the thermal transfer temperature for forming the indented pattern on the first optical member (such a way of transferring and forming the indented pattern is hereinafter referred to as thermal transfer).

This makes it possible to prevent the middle layer provided between the first optical member and the second optical member from being affected by heat applied to form the indented pattern on the second optical member. As such, it is possible to prevent defects from occurring in the middle layer.

This makes it possible to form the indented patterns on the respective first and second optical members, after stacking a material constituting the first optical member, the middle layer, and a material constituting the second optical member.

This makes it unnecessary to stack the materials constituting the optical laminate after forming the indented patterns. Accordingly, it is possible to prevent defects from occurring, e.g., prevent already-formed indented patterns from being destroyed.

As such, it is possible to form the indented patterns on the front and back surfaces while preventing occurrence of defects.

Further, the optical laminate is preferably configured such that a difference between the glass transition point of the first optical member and the glass transition point of the second optical member is 25°C or greater.

The configuration makes it possible to sufficiently increase a difference between the thermal transfer temperature for forming the indented pattern on the first optical member and the thermal transfer temperature for forming the indented pattern on the second optical member. Accordingly, it is possible to increase a margin for heat during the production step in which the indented patterns are formed. As such, it is possible to further ensure that the middle layer is not affected by heat that is applied to form the indented pattern on the second optical member. This makes it possible to further ensure that defects do not occur.

Further, the optical laminate is preferably configured such that the glass transition point of the second optical member is 90°C or higher. The configuration makes it possible to prevent the second optical member from deforming due to heat when the optical laminate is used as an optical component. Accordingly, it is possible to configure an optical laminate that is highly reliable under heat.

The optical laminate is preferably configured such that: the first optical member and the second optical member are each made from a transparent resin material; the middle layer provided between the first optical member and the second optical member is a low refractive index layer; and the low refractive index layer has a refractive index which is (i) lower than a refractive index of the first optical member and (ii) equal to or lower than a refractive index of the second optical member.

The configuration makes it possible to allow light having entered the first optical member to be guided inside the first planar member, by utilizing a difference between refractive indices of the first planar member and the low refractive index layer.

Further, in a case where the refractive index of the low refractive index layer is lower than that of the second planar member, it is further possible to reduce the angle of incidence, on the second planar member, of light having passed through the low refractive layer, and thus possible to reduce the angle of incidence of the light on the indented pattern of the second planar member. This makes it possible to enhance the effects of reflection and diffusion brought about by the indented pattern of the second planar member.

As such, it is possible to use the optical laminate as a light guide.

Further, the optical laminate is preferably configured such that an adhesion layer is provided between the first optical member and the low refractive index layer, which adhesion layer joins the first optical member and the low refractive index layer together and is made from a material having a glass transition point higher than the glass transition point of the first optical member.

The configuration makes it possible to prevent the second optical member from becoming fluid by heat that (i) is applied to transfer the indented pattern to the front surface of the first optical member, which is provided on one surface side (front surface side) of the adhesion layer, and (ii) reaches via the low refractive index layer the second optical member, which is provided on the other surface side (back surface side) of the adhesion layer.

In addition, since the heat applied to transfer the indented pattern to the front surface of the first optical member reaches the low refractive index layer, it is possible to suppress expansion of the low refractive index layer, and thus possible to prevent the properties of a low refractive index material from being impaired.

It is preferable that an illumination device of the present invention include: the foregoing optical laminate; and a light source provided on a side surface side of the first optical member, the second indented pattern on the second optical member being arranged so as to reflect part, of light that is emitted from the light source and has entered the first optical member, which has passed through the low refractive index layer and reached the second indented pattern, thereby to allow the part of the light to pass through the low refractive index layer and the first optical member and then to travel out of the optical laminate.

According to the configuration, light emitted from the light source enters the first optical member, and is guided inside the first optical member because of (i) the indented pattern on the first optical member and (ii) a difference between refractive indices of the first optical member and the low refractive index layer. Further, part of the light having entered the first optical member, which part has passed through the low refractive index layer, is reflected by the indented pattern on the second optical member so as to pass through the low refractive index layer and the first optical member and then travel out of the optical laminate. This makes it possible to cause the light emitted from the light source to be emitted in the form of a plane with use of the optical laminate.

As such, it is possible to configure an illuminating device in which occurrence of defects is prevented.

It is preferable that a liquid crystal display device of the present invention include: the foregoing illuminating device; and a liquid crystal display panel provided so as to face the front surface of the optical laminate. The configuration makes it possible to configure a liquid crystal display device in which occurrence of defects is prevented.

A production method for an optical laminate of the present invention is a method of producing an optical laminate having a first indented pattern on its front surface and a second indented pattern on its back surface, the optical laminate comprising a first optical member including the first indented pattern, a second optical member including the second indented pattern, and a middle layer provided between the first optical member and the second optical member, said method, including the steps of: stacking the middle layer on a first planar member, the first planar member serving as the first optical member after the first indented pattern is formed on the front surface; and stacking a second planar member on the first planar member via the middle layer so that the second planar member is less in film thickness than the first planar member, the second planar member (i) serving as the second optical member after the second indented pattern is formed on the back surface and (ii) being made from a material having a glass transition point lower than a glass transition point of the first planar member.

According to the configuration, the second planar member is formed so as to be less in film thickness than the first planar member. Accordingly, the film thickness of the second optical member is less than the film thickness of the first optical member. This makes it possible to reduce the film thickness of the optical laminate as a whole.

Further, according to the configuration, the second planar member has a glass transition point lower than that of the first planar member. Therefore, when the indented patterns are formed on the respective first and second planar members by thermal transfer, the indented pattern on the second planar member can be formed even in a case where the temperature for the second planar member that is less in film thickness than the first planar member is set to low.

This makes it possible to prevent the middle layer provided between the first planar member and the second planar member from being affected by heat applied to form the indented pattern on the second planar member. As such, it is possible to prevent defects from occurring in the middle layer.

This makes it possible to form the indented patterns on the respective first and second planar members, after stacking a material constituting the first planar member, the middle layer, and a material constituting the second planar member.

This makes it unnecessary to stack the materials constituting the optical laminate after forming the indented patterns. Accordingly, it is possible to prevent defects from occurring, e.g., prevent already-formed indented patterns from being destroyed.

As such, it is possible to form the indented patterns on the front and back surfaces while preventing occurrence of defects.

It is preferable that the method further include the step of forming the first and second indented patterns on the respective first and second planer members by applying heat to a laminate constituted by a stack of the first planar member, the middle layer and the second planar member, the heat being applied from a surface side of the first planar member which side is opposite to a surface side on which the middle layer is formed and from a surface side of the second planar member which side is opposite to a surface side on which the middle layer is formed, and that the method be configured such that, when forming the first and second indented patterns, the heat applied to the second planar member has a temperature lower than a temperature of the heat applied to the first planar member.

According to the configuration, the second planar member has a glass transition point lower than that of the first planar member. Accordingly, even if the temperature of heat applied to the second planar member is lower than that of heat applied to the first planar member, it is possible to form the indented pattern on the second planar member.

This makes it possible to prevent defects due to heat from occurring in the middle layer provided between the first planar member and the second planar member.

As such, it is possible to form the indented patterns on the front and back surfaces while preventing occurrence of defects.

The method is preferably configured such that: a difference between the glass transition point of the first planar member and the glass transition point of the second planar member is 25°C or greater; and in the step of forming the first and second indented patterns on the respective first and second planer members, a temperature of the heat applied to the first planar member in order to form the first indented pattern on the first planar member is higher than the glass transition point of the first planar member, and a temperature of the heat applied to the second planar member in order to form the second indented pattern on the second planar member is higher than the glass transition point of the second planar member.

According to the configuration, heat having a temperature higher than the glass transition point of the first planar member is applied to the first planar member, thereby the indented pattern can be formed on the first planar member. Further, heat having a temperature higher than the glass transition point of the second planar member is applied to the second planar member, thereby the indented pattern can be formed on the second planar member.

Further, since the difference between the glass transition point of the first planar member and the glass transition point of the second planar member is 25°C or greater, it is possible to sufficiently increase a difference between the thermal transfer temperature for forming the indented pattern on the first planar member and the thermal transfer temperature for forming the indented pattern on the second planar member.

Accordingly, a margin for heat is large when the indented patterns are formed on the respective first and second planar members. This makes it possible to further ensure that the middle layer is not affected by heat that is applied to form the indented pattern on the second optical member.

Further, since the margin for heat is increased when the indented patterns are formed on the respective first and second planar members, it is possible to easily find conditions for an optimum production process, which conditions need to be found when the indented patterns to be formed on the respective first and second planar members and/or materials for the first and second planar members are changed.

Further, the method is preferably configured such that, when forming the first and second indented patterns, the temperature of the heat applied to the first planar member is higher than the glass transition point of the first planar member by not less than 10°C but not more than 20°C, and the temperature of the heat applied to the second planar member is higher than the glass transition point of the second planar member by not less than 10°C but not more than 20°C.

The configuration makes it possible to accurately and correctly form the indented patterns on the respective first and second planar members.

Further, the method is preferably configured that, in the step of forming the first and second indented patterns on the respective first and second planer members, the second indented pattern is formed on the second planar member while the first indented pattern is being formed on the first planar member.

The configuration makes is possible to reduce time taken to form the indented patterns on the respective first and second planar members, and thus possible to improve productivity.

Further, the method is preferably configured such that, in the step of forming the first and second indented patterns on the respective first and second planer members, a metallic mold from which the first and second indented patterns are transferred to the respective first and second planar members is used, and the metallic mold is constituted by a metallic mold upper part and a metallic mold lower part which are coupled together, the metallic mold upper part being a part from which the first indented pattern is transferred to the first planer member and the metallic mold lower part being a part from which the second indented pattern is transferred to the second planar member.

According to the configuration, the metallic mold upper part and the metallic mold lower part are coupled together. This makes it possible to concurrently carry out (i) alignment for transferring the indented pattern to the first planar member and (ii) alignment for transferring the indented pattern to the second planar member. This makes it possible to reduce manufacturing time, and thus possible to improve productivity. This further makes it possible to maintain stable quality.

### Industrial Applicability

The present invention makes it possible to produce an optical laminate that has indented patterns on its front and back surfaces and that is constituted by a stack of a plurality of layers, by stacking the layers on top of each other and thereafter forming the indented patterns on the front and back surfaces by thermal imprinting. Accordingly, the present invention is usable in a light guide, an illuminating device including the light guide, and a liquid crystal display device including the light guide.

### Reference Signs List

10, 18 Backlight (illuminating device)
11 Light source
12 Light guide (optical laminate)
13 Light distribution control part (second optical member)
14 Low refractive index layer (middle layer)
15 Light guide plate (first optical member)
30 Liquid crystal display device
103 Indented pattern
105 Indented pattern
113 Light distribution control part material (second planar member)
115 Light guide plate material (first planar member)
150 Metallic mold
150a Metallic mold upper part
150b Metallic mold lower part

## Claims

1. An optical laminate having a first indented pattern on its front surface and a second indented pattern on its back surface,
said optical laminate, comprising:
a first optical member including the first indented pattern;
a second optical member including the second indented pattern; and
a middle layer provided between the first optical member and the second optical member,
the second optical member being less in film thickness than the first optical member, and
the second optical member having a glass transition point lower than a glass transition point of the first optical member.

2. The optical laminate according to claim 1, wherein a difference between the glass transition point of the first optical member and the glass transition point of the second optical member is 25°C or greater.

3. The optical laminate according to claim 1 or 2, wherein the glass transition point of the second optical member is 90°C or higher.

4. The optical laminate according to any one of claims 1 through 3, wherein:
the first optical member and the second optical member are each made from a transparent resin material;
the middle layer provided between the first optical member and the second optical member is a low refractive index layer; and
the low refractive index layer has a refractive index which is (i) lower than a refractive index of the first optical member and (ii) equal to or lower than a refractive index of the second optical member.

5. The optical laminate according to claim 4, wherein an adhesion layer is provided between the first optical member and the low refractive index layer, which adhesion layer joins the first optical member and the low refractive index layer together and is made from a material having a glass transition point higher than the glass transition point of the first optical member.

6. An illuminating device comprising:
an optical laminate recited in claim 4 or 5; and
a light source provided on a side surface side of the first optical member,
the second indented pattern on the second optical member being arranged so as to reflect part, of light that is emitted from the light source and has entered the first optical member, which has passed through the low refractive index layer and reached the second indented pattern, thereby to allow the part of the light to pass through the low refractive index layer and the first optical member and then to travel out of the optical laminate.

7. A liquid crystal display device comprising:
an illuminating device recited in claim 6; and
a liquid crystal display panel provided so as to face the front surface of the optical laminate.

8. A method of producing an optical laminate having a first indented pattern on its front surface and a second indented pattern on its back surface, the optical laminate comprising a first optical member including the first indented pattern, a second optical member including the second indented pattern, and a middle layer provided between the first optical member and the second optical member,
said method, comprising the steps of:
stacking the middle layer on a first planar member, the first planar member serving as the first optical member after a plurality of the first indented patterns are formed on the front surface; and
stacking a second planar member on the first planar member via the middle layer so that the second planar member is less in film thickness than the first planar member, the second planar member (i) serving as the second optical member after a plurality of the second indented patterns are formed on the back surface and (ii) being made from a material having a glass transition point lower than a glass transition point of the first planar member.

9. A method according to claim 8, further comprising the step of forming the first and second indented patterns on the respective first and second planer members by applying heat to a laminate constituted by a stack of the first planar member, the middle layer and the second planar member, the heat being applied from a surface side of the first planar member which side is opposite to a surface side on which the middle layer is formed and from a surface side of the second planar member which side is opposite to a surface side on which the middle layer is formed,
wherein, when forming the first and second indented patterns, the heat applied to the second planar member has a temperature lower than a temperature of the heat applied to the first planar member.

10. The method according to claim 8 or 9, wherein:
a difference between the glass transition point of the first planar member and the glass transition point of the second planar member is 25°C or greater; and
in the step of forming the first and second indented patterns on the respective first and second planer members,
a temperature of the heat applied to the first planar member in order to form the first indented pattern on the first planar member is higher than the glass transition point of the first planar member, and
a temperature of the heat applied to the second planar member in order to form the second indented pattern on the second planar member is higher than the glass transition point of the second planar member.

11. The method according to claim 9 or 10, wherein, when forming the first and second indented patterns,
the temperature of the heat applied to the first planar member is higher than the glass transition point of the first planar member by not less than 10°C but not more than 20°C, and
the temperature of the heat applied to the second planar member is higher than the glass transition point of the second planar member by not less than 10°C but not more than 20°C.

12. The method according to any one of claims 8 through 11, wherein, in the step of forming the first and second indented patterns on the respective first and second planer members,
the second indented pattern is formed on the second planar member while the first indented pattern is being formed on the first planar member.

13. The method according to any one of claims 8 through 12, wherein, in the step of forming the first and second indented patterns on the respective first and second planer members, a metallic mold from which the first and second indented patterns are transferred to the respective first and second planar members is used, and
the metallic mold is constituted by a metallic mold upper part and a metallic mold lower part which are coupled together, the metallic mold upper part being a part from which the first indented pattern is transferred to the first planer member and the metallic mold lower part being a part from which the second indented pattern is transferred to the second planar member.
